# EUROPÄISCHE PATENTSCHRIFT

(11) **EP 2 544 869 B1**
(45) Veröffentlichungstag und Bekanntmachung des Hinweises auf die Patenterteilung: **11.05.2016**
(21) Anmeldenummer: 11707803.0
(22) Anmeldetag: 03.03.2011
(51) Int. Cl.: B29B 9/06

(54) **VORRICHTUNG ZUM HERSTELLEN VON GRANULATKÖRNERN**
APPARATUS FOR PRODUCING GRANULE PARTICLES
DISPOSITIF DE FABRICATION DE GRANULÉS

(30) Priorität: 09.03.2010 DE 202010003348 U
(43) Veröffentlichungstag der Anmeldung: 16.01.2013
(73) Patentinhaber: Maag Automatik GmbH, 63762 Großostheim (DE)
(72) Erfinder: DAHLHEIMER, Stefan, 63801 Kleinostheim (DE)
(74) Vertreter: Spranger, Stephan
(86) Internationale Anmeldenummer: PCT/EP2011/001066
(87) Internationale Veröffentlichungsnummer: WO 2011/110311

(56) Entgegenhaltungen:
- EP-A1- 2 008 784
- WO-A2-2007/107584
- DE-A1-102004 050 356

## Beschreibung

Die Erfindung betrifft eine Vorrichtung zum Herstellen von Granulatkörnern z.B. aus einer Kunststoffschmelze, aufweisend eine Lochplatte mit Öffnungen, aus welchen die Schmelze extrudiert wird, eine Prozesskammer, in welche die Schmelze extrudiert wird, eine Zerteilungsvorrichtung zur Zerteilung von aus der Lochplatte extrudierten Strängen der Schmelze in einzelne Granulatkörner, wobei die Prozesskammer einen Einlass für das Befüllen mit einem Prozessfluid und einen Auslass für das Prozessfluid und die darin befindlichen Granulatkörner aufweist, und eine Fördereinrichtung, mittels welcher das Prozessfluid über den Einlass in die Prozesskammer zugeführt wird und das Prozessfluid mit den darin enthaltenen Granulatkörnern über den Auslass von der Prozesskammer weggeführt wird, gemäß dem Oberbegriff des Anspruchs 1.

Generell werden zur Granulierung von thermoplastischem Kunststoffmaterial, wie z.B. Polyethylen oder Polypropylen, häufig Granuliervorrichtungen mit Extrudern eingesetzt, bei welchen das geschmolzene Kunststoffmaterial durch Düsenöffnungen einer Vorrichtung in ein Kühlmedium, beispielsweise Wasser, gepresst wird und von einer Messeranordnung, deren zumindest ein Messer die Düsenöffnungen der Vorrichtung überstreicht, dort abgetrennt wird, so dass Granulatkörner gebildet werden. Entsprechende Vorrichtungen, etwa Vorrichtungen zur Unterwassergranulierung, sind als Anlagen beispielsweise unter der Produktbezeichnung SPHERO vom Unternehmen Automatik Plastics Machinery GmbH bekannt.

Bei solchen Unterwassergranulieranlagen ist es gelegentlich zu Wartungszwecken nötig, diese von Prozessfluid, beispielsweise Wasser, zu entleeren, wobei insbesondere die Prozesskammer und die Zuleitungen entsprechend vor dem Öffnen der gesamten Anlage möglichst vollständig entleert sein sollten. Bisher wird dazu entweder rein durch Schwerkraft Prozessfluid aus einem aus der Prozesskammer nach unten verlaufenden Rohr abgelassen. Auch ist bislang beispielsweise eine aktive Absaugung des Prozessfluids aus der Prozesskammer z.B. bei Unterwassergranulierungsanlagen unter der Produktbezeichnung SPHERO des Unternehmens Automatik Plastics Machinery GmbH angewandt worden. Die genannten Anlagen mit entsprechenden Entleerungsverfahren haben den Nachteil, dass entweder die Entleerung eine gewisse Zeit in Anspruch nimmt, da diese unter dem Einfluss der Schwerkraft erfolgt, oder dass die Absaugung von Prozessfluid nicht unter allen Umständen vollständig insbesondere aus der Prozesskammer erfolgen kann, so dass Reste des Prozessfluids, eventuell sogar noch mit darin befindlichen Granulatkörnern, in der Prozesskammer oder dem angrenzenden Verrohrungssystem solcher Anlagen verbleiben können. Generell sind die erforderlichen Einrichtungen zur Entleerung jedenfalls gemäß dem Stand der Technik mit einer relativ großen Anzahl zu schaltender Ventile der Anlage verbunden, und eine aktiv steuerbare und gleichzeitig einfache, sowie rasche und vollständige Entleerung ist damit kaum möglich.

Das Dokument EP 2 008 784 A1 beschreibt eine Granuliervorrichtung deren Prozesskammer einen Einlass für das Befüllen mit einem Prozessfluid auf einem Niveau in der unteren Hälfte der Prozesskammer und einen Auslass für das Prozessfluid und die darin befindlichen Granulatkörner in der oberen Hälfte der Prozesskammer angeordnet aufweist, und eine Fördereinrichtung, mittels welcher das Prozessfluid über den Einlass in die Prozesskammer zugeführt wird und das Prozessfluid mit den darin enthaltenen Granulatkörnern über den Auslass von der Prozesskammer weggeführt wird.

Es ist somit die Aufgabe der vorliegenden Erfindung, eine Vorrichtung zum Herstellen von Granulatkörnern vorzusehen, welche die Nachteile des Standes der Technik überwindet und insbesondere eine solche Vorrichtung vorzusehen, welche konstruktiv einfach und möglichst kostengünstig eine optimale, vollständige und rasche Entleerung der Prozesskammer einer solchen Vorrichtung ermöglicht.

Die erfindungsgemäße Aufgabe wird gelöst durch eine Vorrichtung zum Herstellen von Granulatkörnern mit den Merkmalen gemäß Anspruch 1. Bevorzugte Ausführungsformen sind in den abhängigen Ansprüchen definiert.

Die erfindungsgemäße Vorrichtung zum Herstellen von Granulatkörnern, bevorzugt aus einer Kunststoffschmelze, weist auf eine Lochplatte mit Öffnungen, aus welchen eine Schmelze extrudiert wird, eine Prozesskammer, in welche die Schmelze extrudiert wird, eine Zerteilungsvorrichtung zur Zerteilung von aus der Lochplatte extrudierten Strängen der Schmelze in einzelne Granulatkörner, wobei die Prozesskammer einen Einlass für das Befüllen mit einem Prozessfluid, bevorzugt Wasser, und einen Auslass für das Prozessfluid und die darin befindlichen Granulatkörner aufweist, und eine Fördereinrichtung, beispielsweise eine Pumpvorrichtung mit einem Ausgleichsbehälter, mittels welcher das Prozessfluid über den Einlass in die Prozesskammer zugeführt wird und das Prozessfluid mit den darin enthaltenen Granulatkörnern weiter über den Auslass von der Prozesskammer weggeführt wird. Um das Entleeren der Prozesskammer bzw. der Anlage der erfindungsgemäßen Vorrichtung zu verbessern, ist der Einlass auf einem Niveau in der unteren Hälfte der Prozesskammer angeordnet und weist eine Einlassöffnung in der Prozesskammer und einen zur Prozesskammer hinführend angeordneten Einlasskanal auf, wobei der Einlasskanal bevorzugt von dem genannten Niveau weiter nach unten verlaufend von der Prozesskammer weg angeordnet ist. Erfindungsgemäß ist ein Dreiwegeventil, welches jeweils eine Fluidverbindung zwischen jeweils zweien seiner Anschlüsse herstellen kann, zwischen dem Einlasskanal und einer Prozessfluidversorgungsleitung, welche bevorzugt die Verbindung zur Fördereinrichtung aufweist, sowie einer von dem Dreiwegeventil nach weiter unten führenden Prozessfluidablassleitung vorgesehen. Das Dreiwegeventil ist erfindungsgemäß weiter unterhalb des Niveaus des Einlasses angeordnet. Der Auslass aus der Prozesskammer ist in der oberen Hälfte der Prozesskammer angeordnet und weist eine Auslassöffnung in der Prozesskammer und einen von der Prozesskämmer wegführend angeordneten Auslasskanal auf, wobei der Auslasskanal bevorzugt geradlinig von der Prozesskammer wegführend angeordnet ist und bevorzugt tangential davon wegführend angeordnet ist. Eine Pneumatikeinrichtung ist über ein Ventil am Auslasskanal mit der Prozesskammer so verbindbar erfindungsgemäß vorgesehen, dass zur Entleerung der Prozesskammer von dem Prozessfluid die Prozesskammer mit Druckluft aus der Pneumatikeinrichtung befüllbar ist, so dass das Prozessfluid aus der Prozesskammer über die Einlassöffnung und den Einlasskanal sowie das Dreiwegeventil und die Prozessfluidablassleitung austreibbar ist.

Die Anordnung des Drei-Wege-Auslassventils als tiefsten Punkt der Anlage unterhalb der Prozesskammer und dem Einlass, dem Einlasskanal, dem Auslass sowie dem Auslasskanal und die Zufuhr von Druckluft über das Ventil am Auslasskanal über der Prozesskammer bietet eine zuverlässige und rasche Entleerbarkeit der Prozesskammer bzw. des gesamten entsprechenden Anlagenteils der so erfindungsgemäß gestalteten Granulierungsvorrichtung. Die zum Entleeren notwendige Konstruktion ist dabei mit dem Ventil zur Druckluftzufuhr und dem Dreiwegeventil als tiefsten Punkt der entsprechenden Anordnung so erfindungsgemäß einfach gestaltet.

Um eine möglichst vollständige Entleerung auch mit geringem zusätzlichen Druck zu ermöglichen, d. h. mit Unterstützung der Schwerkraft im Bereich der Prozesskammer, ist gemäß einer bevorzugten Ausführungsform der erfindungsgemäßen Vorrichtung die Einlassöffnung so gestaltet, dass diese ein Niveau aufweist, welches auf Höhe des untersten Niveaus der Prozesskammer liegt, wobei das Dreiwegeventil erfindungsgemäß bevorzugt weiter unterhalb dieses untersten Niveaus angeordnet ist.

Um den aus der Pneumatikeinrichtung über das Ventil in den Auslasskanal und die Prozesskammer einbringbaren Überdruck mit Druckluft gezielt der Prozesskammer zuführen zu können, ohne dass (ein Teil) der (des) Überdruck(s) in andere Anlagenteile gelangt, und um dabei gleichzeitig möglichst den Umlauf und/oder das Druckniveau des Prozessfluids in weiteren Anlagenteilen aufrecht erhalten zu können, weist die Vorrichtung bevorzugt jeweils in Fluidverbindung zwischen dem Auslasskanal und der Prozessfluidversorgungsleitung angeordnet eine Bypass-Leitung auf, und im Auslasskanal in Auslassrichtung von der Prozesskammer gesehen weiter entfernt von der Prozesskammer als das (Luft-)Ventil am Auslasskanal ist ein Bypass-Dreiwegeventil so vorgesehen, dass dadurch entweder der Auslasskanal durchgängig verbunden ist und die Bypass-Leitung vom Auslasskanal abgetrennt ist (Betriebszustand der Anlage), oder dadurch die Bypass-Leitung mit dem von der Prozesskammer entfernter angeordneten Teil des Auslasskanals verbunden ist (bei Entleerung), wobei dann der Auslasskanal entsprechend stromaufwärts des Ventils, d.h. am entsprechenden Ort des Bypass-Dreiwegeventils weiter entfernt von der Prozesskammer als das Ventil; abgesperrt ist.

Die Funktionen von Auslass und Einlass an der Prozesskammer können im Betrieb auch vertauscht sein. Das heißt, der Einlass, wie weiter oben beschrieben, kann sich im oberen Bereich der Prozesskammer befinden und der Auslass, wie weiter oben beschrieben, kann sich im unteren Bereich der Prozesskammer befinden. Die Anordnung und Funktion der sonstigen beschriebenen Elemente bleibt dabei aber gleich.

Im Normalbetrieb der erfindungsgemäßen Anlage während der Granulation ist also das Prozessfluid umlaufend von der Prozessfluidversorgungsleitung über das Dreiwegeventil und den Einlasskanal sowie der Einlassöffnung der Prozesskammer zugeführt, und das Prozessfluid mit den dann darin enthaltenen Granulatkörnern wird weiter über den Auslass mit der Auslassöffnung und dem Auslasskanal von der Prozesskammer weggeführt, wobei dabei die Pneumatikeinrichtung über das Ventil keine Druckluft zur Entleerung der Prozesskammer in den Auslasskanal einbläst und wobei auch das zusätzliche Bypass-Dreiwegeventil so geschaltet ist, dass der Auslasskanal durchgängig verbunden offen ist und die Bypass-Leitung vom Auslasskanal abgetrennt ist.

Beim Entleeren der erfindungsgemäßen Vorrichtung ist bevorzugt das zusätzliche Bypass-Dreiwegeventil so geschaltet, dass der Bereich des Auslasskanals angrenzend an die Prozesskammer von dem anderen Bereich des Auslasskanals, welcher entfernter von der Prozesskammer verläuft, abgeschlossen bzw. abgetrennt ist, dabei aber eine Verbindung des anderen Bereich des Auslasskanals, welcher entfernter von der Prozesskammer verläuft, mit der Bypass-Leitung besteht, und die Pneumatikeinrichtung führt über das Ventil Druckluft zur Entleerung der Prozesskammer über den Auslasskanal und die Auslassöffnung der Prozesskammer zu, wobei das entsprechende Prozessfluid aus der Vorrichtung bzw. dem entsprechenden Anlagenteil der Vorrichtung, insbesondere der Prozesskammer, über die Einlassöffnung und den Einlasskanal sowie das Dreiwegeventil über die Prozessfluidablassleitung austreibbar ist, da dann das Dreiwegeventil entsprechend den Einlasskanal mit der Prozessfluidablassleitung verbindet. Dabei kann gleichzeitig der Umlauf und das Druckniveau des Prozessfluids in weiteren Anlagenteilen aufrecht erhalten werden, da ja über die Bypass-Leitung und das entsprechend geschaltete Bypass-Dreiwegeventil noch eine Fluidverbindung zwischen dem Auslasskanal, genauer dem von der Prozesskammer entfernter angeordneten Teil des Auslasskanals, und der Prozessfluidversorgungsleitung besteht, wobei der Auslasskanal dort und die Prozessfluidversorgungsleitung mit weiteren Anlagenteilen in Fluidverbindung sind und in diesem Teil/diesen Teilen der Vorrichtung trotz dem beschriebenen Entleerungsvorgang das Prozessfluid strömen und/oder unter Druck gehalten werden kann.

Die Erfindung wird im Folgenden anhand der beigefügten Figuren näher beispielhaft erläutert werden. Dabei zeigen:
- Fig. 1: schematisch eine Vorrichtung zum Granulieren von Granulatkörnern gemäß einer bevorzugten Ausführungsform des Erfindung im Betrieb; und
- Fig. 2: schematisch eine Vorrichtung zum Granulieren von Granulatkörnern gemäß einer bevorzugten Ausführungsform des Erfindung beim Entleeren.

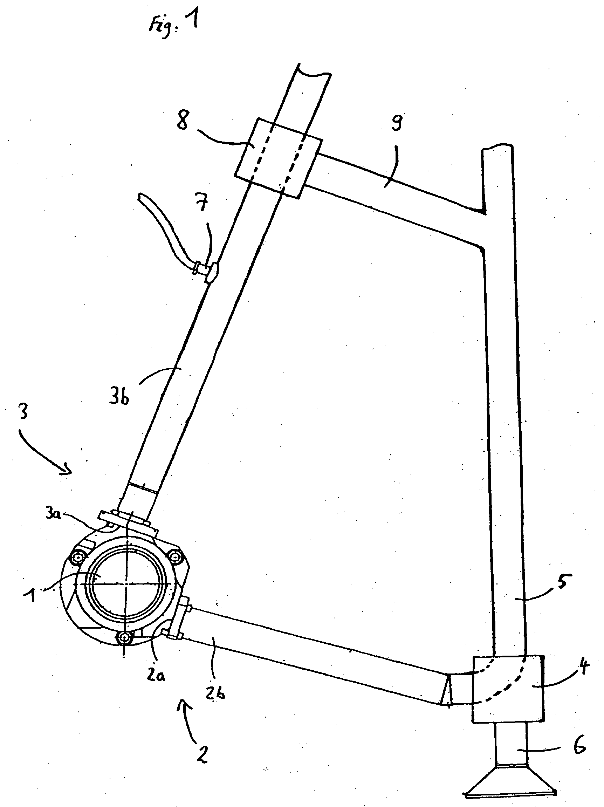

Die Darstellung der Fig. 1 zeigt schematisch in seitlicher Draufsicht einen Teil der Anlage der erfindungsgemäßen Vorrichtung zum Herstellen von Granulatkörnern im Betrieb. Die Vorrichtung weist auf eine Lochplatte mit Öffnungen, aus welchen eine Schmelze, bevorzugt eine Kunststoffschmelze, extrudiert wird (in Fig. 1 nicht gezeigt), eine Prozesskammer 1, in welche die Schmelze extrudiert wird, eine Zerteilungsvorrichtung zur Zerteilung von aus der Lochplatte extrudierten Strängen der Schmelze in einzelne Granulatkörner (auch in Fig. 1 nicht gezeigt), wobei die Prozesskammer 1 einen Einlass 2 für das Befüllen mit einem Prozessfluid, bevorzugt Wasser, und einen Auslass 3 für das Prozessfluid und die darin befindlichen Granulatkörner aufweist, und eine Fördereinrichtung (ebenfalls in Fig. 1 nicht gezeigt), mittels welcher das Prozessfluid über den Einlass 2 in die Prozesskammer 1 zugeführt wird und das Prozessfluid mit den darin enthaltenen Granulatkörnern, über den Auslass 3 von der Prozesskammer 1 weggeführt wird.

Erfindungsgemäß ist der Einlass 2 auf einem Niveau in der unteren Hälfte der Prozesskammer 1 angeordnet und weist eine Einlassöffnung 2a in der Prozesskammer und einen zur Prozesskammer 1 tangential hinführend angeordneten Einlasskanal 2b auf, wobei die Einlassöffnung 2a dabei ein Niveau aufweist, welches auf Höhe des untersten Niveaus der Prozesskammer 1 liegt, und wobei der Einlasskanal 2b schräg von unten zu der Prozesskammer 1 hinführend angeordnet ist.

Erfindungsgemäß ist ein Dreiwegeventil 4 zwischen dem Einlasskanal 2b und einer Prozessfluidversorgungsleitung 5, in Verbindung mit der Fördereinrichtung, sowie einer von dem Dreiwegeventil 4 nach unten führenden Prozessfluidablassleitung 6 angeordnet. Das Dreiwegeventil 4 ist dabei weiter unterhalb des Niveaus des Einlasses 2 angeordnet, nämlich weiter unterhalb des untersten Niveaus der Prozesskammer 1. Der Auslass 3 ist in der oberen Hälfte der Prozesskammer 1 angeordnet und weist eine Auslassöffnung 3a in der Prozesskammer und einen von der Prozesskammer 1 tangential wegführend geradlinig angeordneten Auslasskanal 3b auf. Eine Pneumatikeinrichtung (in Fig. 1 ebenfalls nicht gezeigt) ist über ein Ventil 7 am Auslasskanal 3b mit der Prozesskammer 1 so verbindbar, dass zur Entleerung der Prozesskammer 1 von dem Prozessfluid die Prozesskammer 1 mit Druckluft aus der Pneumatikeinrichtung befüllbar ist, so dass das Prozessfluid nach entsprechender Schaltung des Dreiwegeventils 4 aus der Prozesskammer 1 über die Einlassöffnung 2a und den Einlasskanal 2b sowie das Dreiwegeventil 4 und die Prozessfluidablassleitung 6 aus der Anlage austreibbar ist. In der Darstellung der Figur 1 beim dargestellten Betriebszustand der Vorrichtung ist das Dreiwegeventil 4 so geschaltet, dass eine Fluidverbindung zwischen der Prozessfluidversorgungsleitung 5 und dem Einlasskanal 3b besteht. In dem in Figur 1 gezeigten Betriebszustand ist das Ventil 7 geschlossen.

Ferner ist bei der gezeigten Vorrichtung jeweils in Fluidverbindung zwischen dem Auslasskanal 3b und der Prozessfluidversorgungsleitung 5 eine Bypass-Leitung 9 angeordnet, wobei im Auslasskanal 3b in Auslassrichtung von der Prozesskammer 1 gesehen weiter entfernt von der Prozesskammer 1 als das Ventil 7 (also stromabwärts des Stroms des Prozessfluids im normalen Betriebszustand der Anlage) im Auslasskanal 3b ein Bypass-Dreiwegeventil 8 so vorgesehen ist, dass dadurch, wie in Figur 1 gezeigt, der Auslasskanal 3b durchgängig verbunden ist und die. Bypass-Leitung 9 vom Auslasskanal 3b abgetrennt ist.

Die Strömungsrichtung des Prozessfluids im Betrieb ist gemäß der Darstellung der Figur 1 im Uhrzeigersinn verlaufend. Es ist auch möglich, dass die Strömungsrichtung des Prozessfluids im Betrieb im Gegenuhrzeigersinn verlaufen könnte, d.h. die Funktionen von Auslass 3 und Einlass 2 an der Prozesskammer 1 können dann entsprechend vertauscht sein.

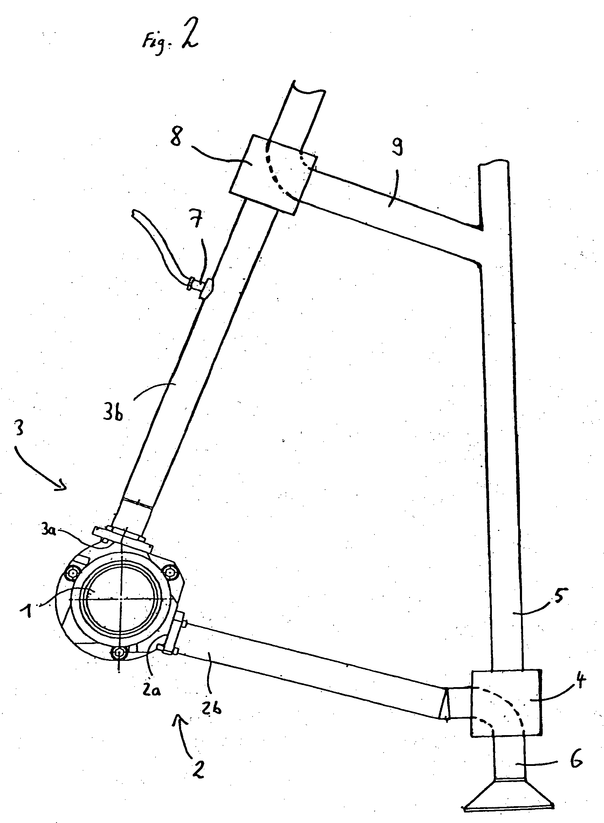

Die Darstellung der Fig. 2 zeigt schematisch in seitlicher Draufsicht einen Teil der Anlage der erfindungsgemäßen Vorrichtung zum Granulieren von Granulatkörnern beim Entleeren.

In der Figur 2 bezeichnen gleiche Bezugszeichen wie in Figur 1 auch gleiche Elemente der erfindungsgemäßen Vorrichtung und die Beschreibung zur Figur 1 gilt somit auch, soweit anwendbar, für die Figur 2.

Die Darstellung der Figur 2 unterscheidet sich von der Darstellung der Figur 1 lediglich dadurch, dass in Figur 2 die Bypassleitung 9 über das Bypass Dreiwegeventil 8 mit dem von der Prozesskammer 1 entfernter angeordneten, d.h. in den Figuren dem oberen, Teil des Auslasskanals 3b verbunden ist und dabei der untere, der Prozesskammer 1 angrenzende Teil des Auslasskanals 3b von dem genannten oberen Teil entsprechend abgetrennt ist. Gleichzeitig ist bei dem in der Figur 2 dargestellten Entleerungszustand der Vorrichtung das Dreiwegeventil 4 so geschaltet, dass eine Fluidverbindung zwischen dem Einlasskanal 2b und der Prozessfluidablassleitung 6 besteht. Die (nicht gezeigte) Pneumatikeinrichtung kann bei dem in Figur 2 gezeigten Entleerungszustand über das Ventil 7 Druckluft zur Entleerung der Prozesskammer 1 über den Auslasskanal 3b und die Auslassöffnung 3a der Prozesskammer 1 zuführen, wodurch das sich dort befindende Prozessfluid über die Einlassöffnung 2a und den Einlasskanal 2b sowie das Dreiwegeventil 4 über die Prozessfluidablassleitung 6 austreibbar ist, so dass die Vorrichtung bzw. der entsprechende Anlagenteil der Vorrichtung, insbesondere die Prozesskammer 1, dann vollständig von Prozessfluid entleert ist.

Mit der erfindungsgemäßen Vorrichtung ist auf einfache Weise ein sicheres, schnelles und vollständiges Entleeren der Granulieranlage bzw. der Prozesskammer der Unterwassergranuliervorrichtung möglich.

## Patentansprüche

1. Vorrichtung zum Herstellen von Granulatkörnern, aufweisend eine Lochplatte mit Öffnungen, aus welchen eine Schmelze extrudiert wird, eine Prozesskammer (1), in welche die Schmelze extrudiert wird, eine Zerteilungsvorrichtung, zur Zerteilung von aus der Lochplätte extrudierten Strängen der Schmelze in einzelne Granulatkörner, wobei die Prozesskammer (1) einen Einlass (2) für das Befüllen mit einem Prozessfluid und einen Auslass (3) für das Prozessfluid und die darin befindlichen Granulatkörner aufweist, und eine Fördereinrichtung, mittels welcher das Prozessfluid über den Einlass (2) in die Prozesskammer (1) zugeführt wird und das Prozessfluid mit den darin enthaltenen Granulatkörnern über den Auslass (3) von der Prozesskammer (1) weggeführt wird, wobei der Einlass (2) auf einem Niveau in der unteren Hälfte der Prozesskammer (1) angeordnet ist und eine Einlassöffnung (2a) in der Prozesskammer (1) und einen zur Prozesskammer (1) hinführend angeordneten Einlasskanal (2b) aufweist, und der Auslass (3) in der oberen Hälfte der Prozesskammer (1) angeordnet ist und eine Auslassöffnung (3a) in der Prozesskammer (1) und einen von der Prozesskammer (1) wegführend angeordneten Auslasskanal (3b) aufweist,
**dadurch gekennzeichnet, dass**
ein Dreiwegeventil (4) zwischen dem Einlasskanal (2b) und einer Prozessfluidversorgungsleitung (5) sowie einer von dem Dreiwegeventil (4) nach unten führenden Prozessfluidablassleitung (6) vorgesehen ist, welches weiter unterhalb des Niveaus des Einlasses (2) angeordnet ist, und dass eine Pneumatikeinrichtung über ein Ventil (7) am Auslasskanal (3b) mit der Prozesskammer (1) so verbindbar vorgesehen ist, dass zur Entleerung der Prozesskammer (1) von dem Prozessfluid die Prozesskammer (1) mit Druckluft aus der Pneumatikeinrichtung befüllbar ist, so dass das Prozessfluid aus der Prozesskammer (1) über die Einlassöffnung (2a) und den Einlasskanal (2b) sowie das Dreiwegeventil (4) und die Prozessfluidablassleitung (6) austreibbar ist.

2. Vorrichtung nach Anspruch 1, **dadurch gekennzeichnet, dass** die Einlassöffnung (2a) ein Niveau aufweist, welches auf Höhe des untersten Niveaus der Prozesskamer (1) liegt, und dass das Dreiwegeventil (4) weiter unterhalb dieses untersten Niveaus angeordnet ist.

3. Vorrichtung nach Anspruch 1 oder 2, **dadurch gekennzeichnet, dass** jeweils in Fluidverbindung zwischen dem Auslasskanal (3b) und der Prozessfluidversorgungsleitung (5) eine Bypass-Leitung (9) angeordnet ist, und dass im Auslasskanal (3b) in Auslassrichtung von der Prozesskammer (1) gesehen weiter entfernt von der Prozesskammer (1) als das Ventil (7) am Auslasskanal (3b) ein Bypass-Dreiwegeventil (8) so vorgesehen ist, dass dadurch entweder der Auslasskanal (3b) durchgängig verbunden ist und die Bypass-Leitung (9) vom Auslasskanal (3b) abgetrennt ist, oder dadurch die Bypass-Leitung (9) mit dem von der Prozesskammer (1) entfernter angeordneten Teil des Auslasskanals (3b) verbunden ist.

4. Vorrichtung nach einem der Ansprüche 1 bis 3, **dadurch gekennzeichnet, dass** im Betrieb die Funktionen von Auslass 3 und Einlass 2 an der Prozesskammer 1 vertauscht sind.

## Claims

1. A device for producing pellets, having a perforated plate with openings from which a melt is extruded, a process chamber (1) into which the melt is extruded, a cutting device for cutting strands of the melt extruded from the perforated plate into individual pellets, wherein the process chamber (1) has an inlet (2) for filling with a process fluid and an outlet (3) for the process fluid and the pellets present therein, and a conveying device by means of which the process fluid is delivered into the process chamber (1) through the inlet (2) and the process fluid with the pellets contained therein is carried away from the process chamber (1) through the outlet (3), wherein the inlet (2) is arranged at a level in the bottom half of the process chamber (1) and has an inlet opening (2a) in the process chamber (1) and an inlet channel (2b) arranged to lead to the process chamber (1), and the outlet (3) is located in the top half of the process chamber (1) and has a discharge opening (3a) in the process chamber (1) and an outlet channel (3b) arranged to lead away from the process chamber (1),
**characterized in that**
a three-way valve (4) is provided between the inlet channel (2b), a process fluid supply line (5), and a process fluid discharge line (6) leading downward from the three-way valve (4), which valve is located farther below the level of the inlet (2), and **in that** a pneumatic device is provided that can be connected to the process chamber (1) through a valve (7) on the outlet channel (3b) in such a manner that the process chamber (1) can be filled with compressed air from the pneumatic device for the purpose of emptying the process chamber (1) of process fluid so that the process fluid can be expelled from the process chamber (1) through the inlet opening (2a) and the inlet channel (2b) as well as the three-way valve (4) and the process fluid discharge line (6).

2. Device according to claim 1, **characterized in that** the inlet opening (2a) has a level located at the height of the lowest level of the process chamber (1), and **in that** the three-way valve (4) is located farther below this lowest level.

3. Device according to claim 1 or 2, **characterized in that** a bypass line (9) is arranged in fluid connection between the outlet channel (3b) and the process fluid supply line (5), and **in that** a three-way bypass valve (8) is provided in the outlet channel (3b) more distant from the process chamber (1) in the discharge direction as viewed from the process chamber (1) than the valve (7) in the outlet channel (3b) in such a manner that by this means either the outlet channel (3b) is continuously connected and the bypass line (9) is isolated from the outlet channel (3b) or the bypass line (9) is connected by this means to the part of the outlet channel (3b) located more distant from the process chamber (1).

4. Device according to any one of claims 1 through 3, **characterized in that** in operation the functions of the outlet 3 and inlet 2 at the process chamber 1 are interchanged.

## Revendications

1. Dispositif pour la fabrication de granulés comportant une plaque perforée présentant des orifices par lesquels une masse fondue est extrudée, une chambre de traitement (1) dans laquelle la masse fondue est extrudée, un dispositif de séparation pour séparer les boudins extrudés de masse fondue sortant de la plaque perforée en granulés, la chambre de traitement (1) comportant une entrée (2) pour la remplir de liquide de process et une sortie (3) pour le liquide de process avec les granulés qui s'y trouvent et un dispositif de transport à l'aide duquel le liquide de process est amené dans la chambre de traitement (1) par l'entrée (2) et le liquide de process avec les granulés qui s'y trouvent est évacué de la chambre de traitement (1) via la sortie (3), l'entrée (2) étant implantée à un niveau dans la moitié inférieure de la chambre de traitement (1) et présentant une ouverture d'entrée (2a) dans la chambre de traitement (1) et un canal d'entrée (2b) menant à la chambre de traitement (1), la sortie (3) étant implantée dans la moitié supérieure de la chambre de traitement (1) et présentant une ouverture de sortie (3a) dans la chambre de traitement (1) et un canal d'évacuation (3b) en aval de la chambre de traitement (1)
**caractérisé en ce que**
une vanne à trois voies (4) est prévue entre le canal d'entrée (2b) et une conduite d'alimentation en liquide de process (5), ainsi qu'une conduite d'évacuation du liquide de process (6) partant d'une vanne à trois voies (4) dirigée vers le bas, située en-dessous du niveau de l'entrée (2) et qu'un dispositif pneumatique est prévu pour être relié à la chambre de traitement (1) au moyen d'une vanne (7) sur le canal d'évacuation (3b) de sorte que la chambre de traitement (1) peut être remplie d'air comprimé pour vider la chambre de traitement (1) du liquide de process, de sorte que le liquide de process peut être expulsé de la chambre de traitement (1) en passant par l'ouverture d'entrée (2a), le canal d'entrée (2b) ainsi que la vanne à trois voies (4) et la conduite d'évacuation (6) du liquide de process.

2. Dispositif selon la revendication 1 **caractérisé en ce que** l'ouverture d'entrée (2a) présente un niveau qui se trouve à hauteur du niveau inférieur de la chambre de traitement (1) et que la vanne à trois voies (4) est implantée plus bas en-dessous de ce niveau inférieur.

3. Dispositif selon la revendication 1 ou 2, **caractérisé en ce qu'**une conduite de dérivation (9) est agencée respectivement entre le canal de sortie (3b) et la conduite d'alimentation en liquide de process (5) en communication liquide et qu'une vanne de dérivation à trois voies (8) est prévue dans le canal d'évacuation (3b) dans le sens d'évacuation vu de la chambre de traitement (1) à une plus grande distance de la chambre de traitement (1) que la vanne (7) sur le canal d'évacuation (3b) de sorte que soit le canal d'évacuation (3b) est relié de façon continue et la conduite de dérivation (9) est coupée du canal d'évacuation (3b) soit que la conduite de dérivation (9) est reliée à la partie du canal d'évacuation (3b) plus éloignée de la chambre de traitement (1).

4. Dispositif selon une des revendications 1 à 3 **caractérisée en ce qu'**en service les fonctions de la sortie 3 et l'entrée 2 sur la chambre de traitement 1 sont interchangées.
